# EUROPEAN PATENT APPLICATION

(11) **EP 1 589 526 A2**
(43) Date of publication of application: **26.10.2005**
(21) Application number: 05103245.6
(22) Date of filing: 21.04.2005
(51) Int. Cl.: G11B 7/007

(54) **Optical disc medium, optical disc apparatus using the same, and data recording method in the same**

(30) Priority: 23.04.2004 JP 2004129085
(71) Applicant: NEC CORPORATION, Tokyo (JP); KABUSHIKI KAISHA TOSHIBA, Tokyo (JP)
(72) Inventor: Yamanaka, Yutaka, c/o NEC Corporation, Tokyo (JP); Shimonou, Shigeru, c/o NEC Corporation, Tokyo (JP); Ide, Tatsunori, c/o NEC Corporation, Tokyo (JP); Takahashi, Hideki, c/o Toshiba Corporation, Tokyo (JP); Ogawa, Akihito, c/o Toshiba Corporation, Tokyo (JP); Kashihara, Yutaka, c/o Toshiba Corporation, Tokyo (JP)
(74) Representative: Betten & Resch

(57) **Abstract**

An optical disc medium includes a system area and a data area following the system area. The data area includes at least one bordered area and a border area after the bordered area. A record control data in a recording operation of a user data in the bordered area is recorded in the system area. The data area may further include a lead-out area provided on an outermost circumference side in the data area. In this case, the lead-out area may have a record capacity equal to or less than that of the bordered area.

## Description

### Background of the Invention

### 1. Field of the Invention

The present invention relates to a technique for recording a user data on an optical disc medium, and more particularly to an optical disc medium, and an optical disc apparatus using the same, and a recording method on the same.

### 2 . Description of the Related Art

In an optical disc field in which a data is recorded and reproduced by using a small optical beam, a ROM (Read Only Memory) medium dedicated to reproduction is first spread widely in which an embossed data pit string is formed in advance, and then CD-R (Compact Disc-Recordable) and DVD-R (Digital Versatile Disc-Recordable) that a user data can be recorded are widely spread. Also, optical disc media called CD-RW (CD-ReWritable) and DVD-RW (DVD-ReWritable) that data can be rewritten are known. Here, the optical disc media that the user data can be recorded are generically referred to as a recording type optical disc medium.

In the recording type optical disc medium, a spiral groove track is formed on an optical disc substrate, and a multi-layer recording layer made of an organic material and the like is formed thereon. A laser beam of high power is focused on this recording layer to change the property of the recording layer and to form a record pit. Thus, a data is recorded on the optical disc medium. The optical disc medium after the recording operation has a same data format as the ROM medium, and a servo signal of the substantially same property as the ROM medium can be obtained form the optical disc medium on which the data recorded. Thus, the optical disc apparatus dedicated to the reproduction can carry out the reproduction of the recorded user data on the optical disc medium.

Also, in the DVD-R, a user data is subjected to a format conversion into a format in which a data ID such as an address, and an error correction code are added, and then is recorded as a series of continuous data on the optical disc medium. This continuous record format is the same format as that of the DVD-ROM.

However, if the optical disc medium is given the perfectly same format as the DVD-ROM, the user data can be recorded only once. Therefore, a recording method called a multi-session and multi-border is adopted to permit the user data to be recorded additionally several times. In this case, a special data called a bordered area where data of a data position and the like is recorded is provided after the user data, and another user data is further recorded thereafter. A reproducing apparatus can reproduce the user data by using the data position data.

In conjunction with the above description, the following techniques for writing a data into a rewritable in recording medium such as CD-RW or DVD-RAM.

Japanese Laid Open Patent Application (JP-A 2000-504462) discloses a writing apparatus which includes a writing unit and a positioning unit. The writing unit writes a mark indicating a data block in an area of a recording medium with an electromagnetic emission beam, in order to write the data block on a track pattern of the rewritable recording medium. The positioning unit positions the writing unit in accordance with a track structure of the recording medium. The track structure has the track pattern. Such a writing apparatus has a first detecting unit, a second detecting unit and an initializing unit. The first detecting unit detects the area of the recording medium used to write the data block. The second detecting unit detects a non-written boundary area adjacent to the used area. The initializing unit writes a dummy data to the non-written boundary area.

Also, Japanese Laid Open Patent Application (JP-A 2000-504463) discloses a writing apparatus, which writes a data block to a track pattern on a writable recording medium. This writing apparatus includes a writing unit and a positioning unit. The writing unit writes a mark indicating a data block into the area of the recording medium with an electromagnetic emission beam. The positioning unit positions the writing unit on the recording medium in accordance with a track structure indicating a track pattern. This writing apparatus includes a state unit for generating a state data to indicate the fact that a write operation is carried out on at least one area of the recording medium. In the writing apparatus, the state data is extended from a start section of the track pattern area in which the data block is written, and has an initial area data for indicating an initial area to which it is written without any interruption.

### Summary of the Invention

An object of the present invention is to provide an optical disc apparatus in which a processing time of a finalizing process can be reduced when a recording operation is completed, and a recording method in an optical disc medium, and the optical disc medium used in an optical disc apparatus.

Another object of the present invention is to provide an optical disc medium in which a recordable capacity can be increased so as to be recognized from a user side, an optical disc apparatus using the same, and an optical disc data recording method in the optical disc apparatus.

In an aspect of the present invention, an optical disc medium includes a system area and a data area following the system area. The data area includes at least one bordered area and a border area after the bordered area. A record control data in a recording operation of a user data in the bordered area is recorded in the system area.

Here, the data area may further include a lead-out area provided on an outermost circumference side in the data area. In this case, the lead-out area may have a record capacity equal to or less than that of the bordered area.

Also, the bordered area on the outermost circumference side may be a final area where a data is recorded. In this case, a finalizing data is recorded in the bordered area on the outermost circumference side.

Also, a data indicating the bordered area on the outermost circumference side is in the system area. In this case, the system area may include a test record area, a record control data area and a user data lead-in area. A trial recording operation is carried out to the test record area to determine an optimal record condition when the user data is recorded in the data area. A data is recorded in the user data lead-in area to indicate a start position of the data area. The data indicating the bordered area on the outermost circumference side is recorded in the record control data area.

In another aspect of the present invention, a data recording method in an optical disc medium, is achieved by providing an optical disc medium which includes a system area and a data area following the system area, wherein the data area includes at least one bordered area and a border area after the bordered area, by recording a user data in the bordered area; and by setting a border area after the bordered area when the record of the user data is completed.

The data recording method may be achieved by further setting a lead-out area on an outermost circumference side in the data area. In this case, the lead-out area may have a record capacity equal to or less than that of the bordered area.

Also, the data recording method may be achieved by further setting the bordered area on the outermost circumference side in the data area as a final area where a data is recorded. In this case, the setting may be achieved by recording a finalizing data in the bordered area on the outermost circumference side.

Also, the data recording method may be achieved by further recording a data indicating the bordered area on the outermost circumference side in the system area as a record control data. In this case, the system area may include a test record area, a record control data area and a user data lead-in area. A trial recording operation is carried out to the test record area to determine an optimal record condition when the user data is recorded in the data area. A data is recorded in the user data lead-in area to indicate a start position of the data area. The recording a data may be achieved by recording the data indicating the bordered area on the outermost circumference side in the record control data area.

In another aspect of the present invention, an optical disc apparatus includes a rotation drive system, an access unit, and a control section. The rotation drive system rotates an optical disc medium which includes a system area and a data area following the system area, wherein the data area includes at least one bordered area and a border area after the bordered area. The control section controls the rotation drive system to rotate the optical disc medium; and encodes a record data and controls the access unit to irradiate a laser beam such that the encoded data is recorded on the optical disc medium. The control section controls the access unit such that a user data is recorded in the bordered area, and the border area is set when the record of the user data is completed.

Here, the control section may control the access unit such that a lead-out area is set on an outermost circumference side in the data area. In this case, the lead-out area may have a record capacity equal to or less than that of the bordered area.

Also, the control section may control the access unit such that the bordered area on the outermost circumference side in the data area is set as a final area where a data is recorded. In this case, the control section may control the access unit to record a finalizing data in the bordered area on the outermost circumference side.

Also, the control section may control the access unit to record a data indicating the bordered area on the outermost circumference side in the system area as a record control data. In this case, the system area may include a test record area, a record control data area and a user data lead-in area. A trial recording operation is carried out to the test record area to determine an optimal record condition when the user data is recorded in the data area. A data is recorded in the user data lead-in area to indicate a start position of the data area. The data indicating the bordered area on the outermost circumference side is recorded in the record control data area. The control section may control the access unit to record the data indicating the bordered area on the outermost circumference side in the record control data area.

### Brief Description of the Drawings

Fig. 1 is a block diagram showing a configuration of an optical disc system of the present invention;
Fig. 2 is a block diagram showing a configuration of an optical disc apparatus of the present invention;
Fig. 3 is a diagram showing a configuration of an optical disc medium of the present invention;
Fig. 4 is a block diagram showing a logical configuration of the optical disc medium of the present invention;
Fig. 5 is a diagram showing a configuration of a data area in a first embodiment of the present invention;
Fig. 6 is a diagram showing a configuration of the data area in a second embodiment of the present invention;
Fig. 7 is a diagram showing an operation for recording in a data area in an optical disc apparatus according to the first embodiment of the present invention; and
Fig. 8 is a diagram showing an operation for recording in a data area in the optical disc apparatus according to a second embodiment of the present invention.

### Description of the Preferred Embodiments

Hereinafter, a data recording system for an optical disc apparatus using an optical disc medium of the present invention will be described in detail with reference to the attached drawings.

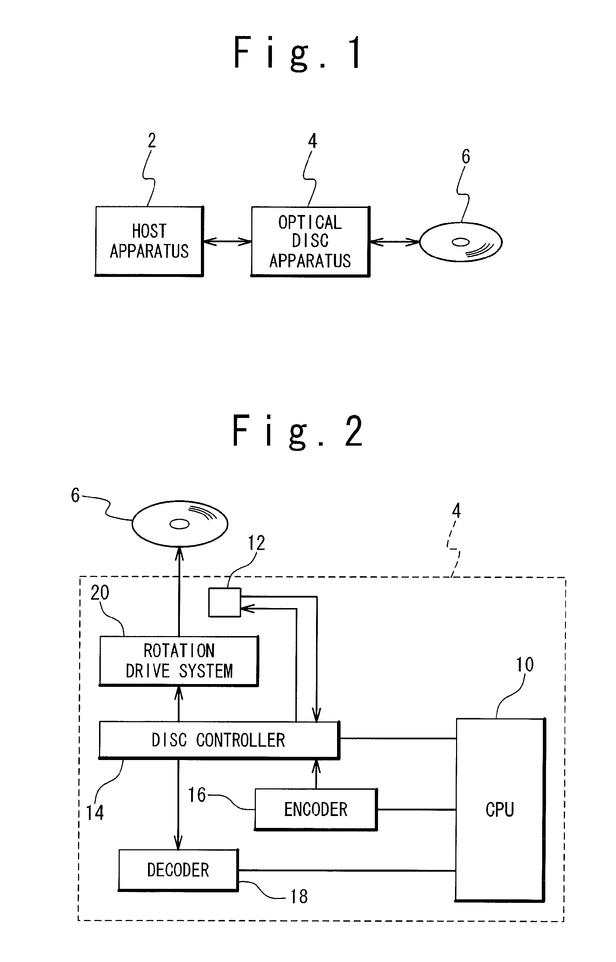

Fig. 1 is a block diagram showing the configuration of the data recording system of the present invention. The data recording system is provided with a host apparatus 2 and an optical disc apparatus 4. The optical disc apparatus 4 is set with an optical disc medium 6 such as a DVD disc, and records a data on the optical disc medium 6 or reproduces the data from the optical disc medium, in accordance with a command from the host apparatus 2. Also, the optical disc apparatus 4 carries out a training process for checking and adjusting a record condition in response to a command from the host apparatus 2 prior to starting the write operation.

Fig. 2 is a block diagram showing the configuration of the optical disc apparatus 4 according to the first embodiment of the present invention. The optical disc apparatus 4 of the first embodiment is provided with a CPU 10, an access section 12, a disc controller 14, an encoder 16, a decoder 18 and a rotation driving system 20.

The CPU 10 controls the entire operation of the optical disc apparatus 4. The CPU 10 exchanges commands, notices and data with the host apparatus 2, and controls the disc controller 14, the encoder 16 and the decoder 18, and also carries out a necessary calculation. In addition, the CPU 10 output a dummy data of a predetermined bit pattern to the encoder 16.

The access section 12 contains a laser diode, uses a laser beam to write a data onto the optical disc medium 6 and reproduces the data from the optical disc medium 6. The access section 12 is well known to a skilled person in the art. The rotation driving system 20 drives the optical disc medium 6 in response to a command from the CPU 10 so that the optical disc medium 6 is rotated, when the optical disc medium 6 is set.

The disc controller 14 controls the access section 12 and the rotation driving system 20 such that the optical disc medium 6 is rotated, a laser control is carried out and the recording and reproducing operations are carried out. The disc controller 14 drives the rotation driving system 20 to rotate the optical disc medium 6 in accordance with a command from the CPU 10. Also, the disc controller 14 controls the position of the access section 12 in accordance with a command from the CPU 10, and also controls the operation of the access section 12 in the recording and reproducing operations. In the recording operation, the disc controller 14 controls the access section 12 to read a data necessary to carry out the recording operation from the optical disc medium 6, and to record the data sent from the encoder 16 onto the optical disc medium 6 based on the read-out necessary data. At this time, the access section 12 outputs the laser beam to record the data onto the optical disc medium 6. Also, in the reproducing operation, the disc controller 14 controls the access section 12 to reproduce the data from the optical disc medium 6. The access section 12 outputs the laser beam to reproduce the data from the optical disc medium 6. The reproduced data is sent through the disc controller 14 to the decoder 18.

The encoder 16 carries out an encoding process on a user data and the dummy data in response to a command from the CPU 10. For example, in case of the DVD, the encoder generates a record data in units of ECC (error correction code) blocks, each of which includes 16 sectors. The generated record data is sent to the access section 12 through the disc controller 14. A configuration in which the ECC block is extended to 32 sectors is proposed in a next generation DVD.

The decoder 18 carries out a decoding process of the data reproduced from the optical disc medium 6 in units of the ECC blocks in response to a command from the CPU 10.

In a recording type optical disc medium 6 such as DVD-R and DVD-RW, a spiral groove track for tracking is formed on an optical disc substrate. A multi-layer recording layer made of an organic material and the like is formed thereon. The laser beam of high power is focused on this recording layer to partially change the recording layer and to form record pits. Thus, the data is recorded on the optical disc medium 6. The optical disc medium 6 after the recording operation has the same data format as that of the embossed optical disc ROM medium (DVD-ROM or the like). Also, since a servo signal having the substantially same characteristics as the optical disc ROM medium can be obtained, the recorded data can be reproduced from the optical disc medium 6 by an optical apparatus dedicated to the reproduction.

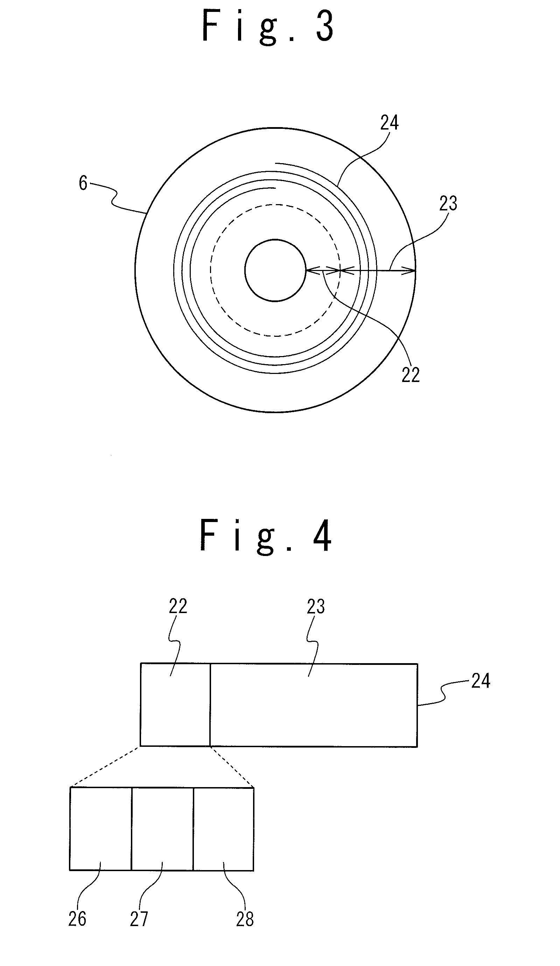

Fig. 3 is a diagram showing the format of the recording type optical disc medium 6. Referring to Fig. 3, the recording type optical disc medium 6 has a system area 22, a data area 23 and a lead-out area (not shown) in a concentric manner from the inner circumference side.

The system area 22 is used to record a system data necessary for the recording and reproducing operations, including a disc data and a data indicative of a user data area in which a user data is recorded. An area in which a record control data is recorded to control the optical disc medium and an area used to check a record condition are secured in the system area 22.

The lead-out area indicates the end of the storage area on the optical disc medium 6. When the lead-out area is detected, it is recognized that the recording operation of the data is not ended on the optical disc medium 6, and cannot be carried out.

The data area 23 is located between the system area 22 and the lead-out area and is used to record the user data. A spiral recording track 24 is formed in the data area 23.

Fig. 4 shows the area arrangement on the disc 6 along the radius direction. Referring to Fig. 4, the area arrangement will be described below. In Fig. 4, the left side indicates the inner circumference side of the disc 6, and the right side indicates the outer circumference side thereof. The system area 22 on the inner circumference side includes a system control data necessary when the optical disc apparatus 4 carries out the recording and reproducing operations, and an arrangement data of recorded data on the optical disc medium 6. The system area 22 is roughly classified into three areas of a test record area 26, a record control data area 27 and a user data lead-in area 28.

The user data lead-in area 28 is arranged on the side closest to the data area 23. This area is used to record a system control data necessary when already recorded data is reproduced from the recording type optical disc medium 6 by the optical disc apparatus dedicated to reproduction. That is, an arrangement of the user data is recorded in the user data lead-in area 28.

The record control data area 27 is used to record a record control data about portions of the data area 23, i.e., a data necessary for the optical disc apparatus 4 to record user data in the data area 23. The record control data contains a data associating with a next recordable position in the data area 23, and the usage situation of the test record area 26. In accompaniment with the increase in the user data recorded in the data area 23, the data of the record control data area 27 is sequentially updated and increased. Thus, a new record control data is additionally recorded in a predetermined unit from the inner circumference side to the outer circumference side.

The test record area 26 is used for a trial recording operation to check the condition optimal to the recording operation. In order to optimize the recording condition in the data area 23, the trial recording is carried out while a power, a record waveform and the like are changed. Although the inside of the test record area 26 may be used in any order, typically, the outer circumference side is firstly used in many cases.

In such an optical disc medium 6, a border area is provided prior to the ending such that the apparatus dedicated to the reproduction can reproduce the recorded user data, namely, compatibility with the apparatus dedicated to the reproduction can be attained. An area segmented by the border areas is referred to as a bordered area.

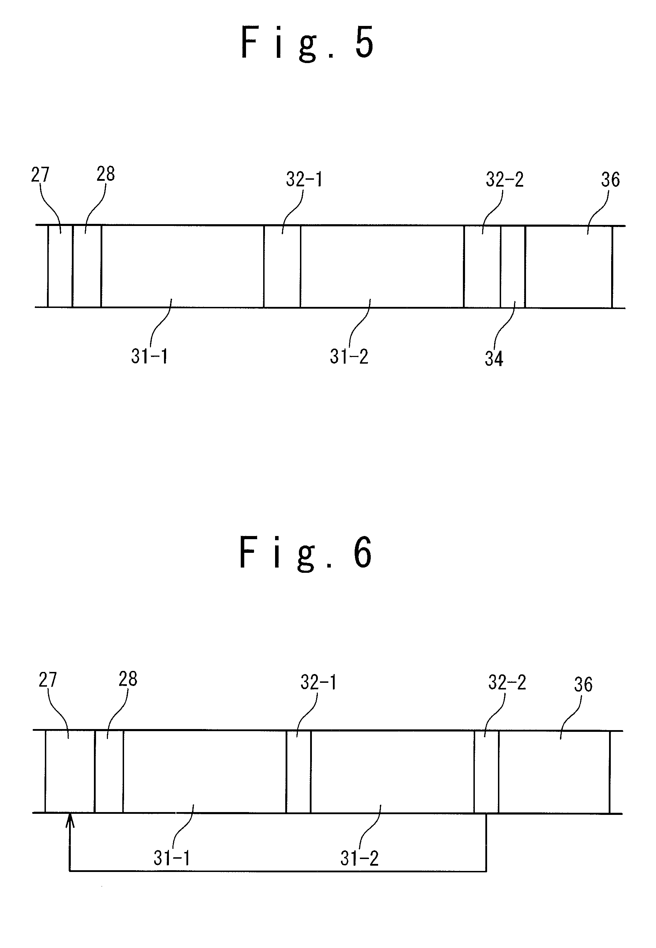

Fig. 5 shows an arrangement of various areas in the optical disc medium 6. Referring to Fig. 5, the arrangement of various areas will be described below. The system area 22 includes a test record area (not shown), a record control data area 27, and a user data lead-in area 28. In the data area 23, bordered areas 31-1 to 31-2 are separated and arranged by border areas 32-1 to 32-2. Here, in order to simplify the explanation, only the two bordered areas are illustrated. However, it is not limited to the two areas.

A lead-out area 34 is arranged following the border area 32-2 to indicate the completion of the record in the optical disc medium 6. Thus, the user data is recorded until the bordered area 31-2. Hereafter, the recording is not performed. That is, a non-recorded area 36 is arranged following the lead-out area 34. This lead-out area 34 indicates the end of the data recorded area on the optical disc medium 6. When the lead-out area 34 is detected at the time of the reproduction, the end of the data area on the optical disc medium 6 is recognized by the optical disc apparatus 4. Conventionally, in order to maintain the compatibility with a ROM medium, a large capacity of lead-out area was provided as a guard area in accordance with the specification of the ROM. Thus, the lead-out area 34 was provided to have a size equal to or larger than the border area 32-2. In the present invention, the border area 32-2 indicates that the bordered area 31-2 is closed, and determines a data capacity required for the apparatus dedicated to the reproduction to reproduce the data of the bordered area 31-2. Therefore, an area with a size equal to or less than the border area 32-2 is assigned to the lead-out area 34, so that to the apparatus dedicated to the reproduction can recognize the end of the data recorded area on the optical disc medium 6. If the lead-out area is small, the time of the finalizing process can be made shorter.

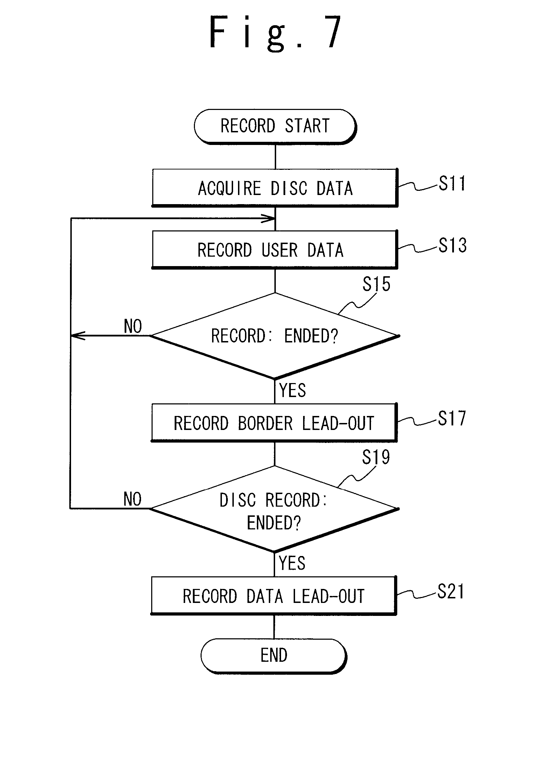

A recording operation under the arrangement in the foregoing format will be described below with reference to Fig. 7. When the optical disc medium 6 is installed in the optical disc apparatus 4, a latest system data is read out from the record control data area 27. If a part of the user data is already recorded, the host apparatus 2 controls the optical disc apparatus 4 to carry out an additional recording after the last recorded position (Step S11).

The user data is recorded from the inner circumference side to the outer circumference side. The user data is recorded in the bordered area 31-1 on the innermost circumference (Step S13). This recording is continued until the user data to be recorded in the bordered area 31-1 has been ended (Step S15-NO). If the recording operation of the user data in the bordered area 31-1 has been ended (Step S15-YES), a border closing process is carried out. In the border closing process, a border lead-out is recorded in the border area 32-1, to indicate the fact that the recording operation of the bordered area 31-1 has been ended (Step S17).

When an additional recording operation is further carried out (Step S19-NO) after the bordered area 31-1 is closed, a border lead-in is recorded in the border area 32-1 and a next user data is recorded in the next bordered area 31-2.

When the user data is recorded in the final bordered area 31-2 in the optical disc medium 6 (Step S13), a border lead-out is recorded in the border area 32-2, and the border closing process is carried out. When the additional recording operation is not carried out on the optical disc medium 6 (Step S19-YES), a disc closing process is carried out in response to an instruction from the host apparatus 2.

In the disc closing process, a user data lead-out is recorded in a lead-out area 34 following the border area 32-2 (Step S21). The user data lead-out only indicates the fact that the recording operation in the optical disc medium 6 has been completed. Thus, the size of the lead-out area 34 may be smaller than the border area 32-2. Also, the finalizing data used for the user data lead-out is not limited and is enough to indicate completion of the recording operation.

In the DVD-R, the width of the user data lead-out in the radius direction of the optical disc medium is 500 µm or more. On the other hand, the width of the bordered area in the radius direction is approximately several 100 µm. However, when the performance of the apparatus dedicated to the reproduction is considered, if the width of the radius direction of the bordered area is approximately 50 to 100 µm, this is acknowledged to be sufficient. Thus, if the bordered area of 50 µm in the minimum is set, the user data lead-out can be similarly set to 50 µm.

The arrangement of the areas in the optical disc medium 6 according to the second embodiment will be described below with reference to Fig. 6. The system area 22 includes the test record area (not shown), the record control data area 27, and the user data lead-in area 28. In the data area 23, the bordered areas 31-1 to 31-2 are separated by the border areas 32-1 to 32-2. The non-recorded area 36 follows on the outer circumference side of the bordered area 31-2. Here, in order to simplify the explanation, only the two bordered areas are illustrated. However, it is not limited to the two areas.

In this embodiment, the lead-out area for indicating the completion of the recording operation into the optical disc medium 6 is not provided, and a data indicating that the border area 32-2 is the final bordered area in the optical disc medium 6 is recorded in, for example, the record control data area 27 of the system area 22. In this case, if the user data of the bordered area is reproduced by referring to the record control data area 27, the apparatus dedicated to the reproduction can stop the reproducing operation at the point where the data indicating the final bordered area is obtained, when the reproducing operation is repeated. Thus, the final bordered area, namely, the final area of the recording can be detected without any user data lead-out indicating the end of the recording of the optical disc medium 6.

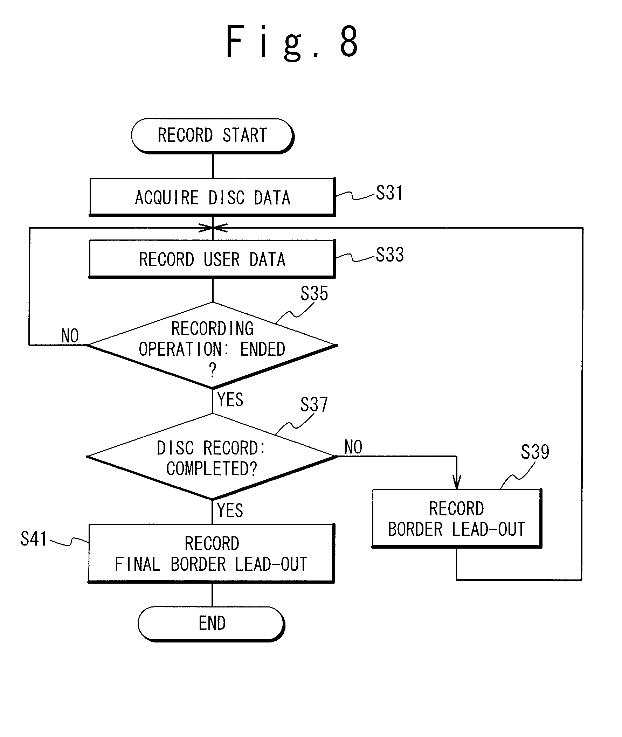

The recording operation under the arrangement in the foregoing shape will be described below with reference to Fig. 8. When the optical disc medium 6 is installed in the optical disc apparatus 4, the latest system data is read out from the record control data area 27. If a part of the user data is already recorded, the host apparatus 2 controls the optical disc apparatus 4 to carry out an additional recording operation after the finally recorded position (Step S31).

The user data is recorded from the inner circumference side to the outer circumference side. The user data is recorded in the bordered area 31-1 on the innermost circumference (Step S33). This recording is continued until the user data to be recorded in the bordered area 31-1 has been ended (Step S35-NO). If the recording operation of the user data in the bordered area 31-1 has been ended (Step S35-YES), the recording operation of a next user data is instructed by the host apparatus 2. Consequently, if the recording operation into the optical disc medium 6 is determined to be continued (Step S37-NO), the border closing process is carried out. In the border closing process, the border lead-out is recorded in the border area 32-1, and indicates the fact that the recording operation of the bordered area 31-1 has been ended (Step S39).

The border lead-in is recorded in the border area 32-1, and the user data is recorded in the next bordered area 31-2 (Step S33). When the user data is recorded in the final bordered area 31-2 in the optical disc medium 6 (Step S33), the host apparatus 2 sends to the optical disc apparatus 4, an instruction for indicating that there is no additional record, together with the end of the recording of the user data. Thus, since the additional recording operation cannot be carried out on the optical disc medium 6 (Step S37-YES), the disc closing process is carried out.

In the disc closing process, the border lead-out is recorded in the border area 32-2 following the bordered area 31-2, and then the data of the border area 32-2 as the final bordered area is recorded in the system area 22. The data of the final bordered area is preferably recorded in the record control data area 27 of the system area 22 where the data of the various bordered areas are recorded. Also, in the disc closing process, a process required as the finalizing process is carried out to record a dummy data in the non-recorded portion of the system area 22.

As mentioned above, the fact that the optical disc medium 6 is finalized can be indicated without the lead-out area 34. For this reason, the processing time when the user data lead-out is recorded in the lead-out area 34 can be reduced, which can reduce the time of the recording in the optical disc medium 6. The record control data may be recorded not only in the system area, but also in an area provided at the inner circumference end of each bordered area.

Also, a data of border lead-out to be recorded in the border area 32-2 may be used as a finalizing data to indicate the final portion of the data recording. In this case, it is not necessary to record the data in the system area 22 to indicate the final border area. If this design is employed, the area to be recorded can be further reduced.

Moreover, by reducing the lead-out area 34 the data area where the user data can be recorded can be extended.

## Claims

1. An optical disc medium comprising:
a system area; and
a data area following said system area,
wherein said data area comprises at least one bordered area and a border area after said bordered area,
a record control data in a recording operation of a user data in said bordered area is recorded in said system area.

2. The optical disc medium according to claim 1, wherein said data area further comprises:
a lead-out area provided on an outermost circumference side in said data area.

3. The optical disc medium according to claim 2, wherein said lead-out area has a record capacity equal to or less than that of said bordered area.

4. The optical disc medium according to claim 1, wherein said bordered area on the outermost circumference side is a final area where a data is recorded.

5. The optical disc medium according to claim 4, wherein a finalizing data is recorded in said bordered area on the outermost circumference side.

6. The optical disc medium according to claim 4 or 5, wherein a data indicating said bordered area on the outermost circumference side is in said system area.

7. The optical disc medium according to claim 6, wherein said system area comprises:
a test record area to which a trial recording operation is carried out to determine an optimal record condition when said user data is recorded in said data area;
a record control data area; and
a user data lead-in area in which a data is recorded to indicate a start position of said data area, and
said data indicating said bordered area on the outermost circumference side is recorded in said record control data area.

8. A data recording method in an optical disc medium, comprising:
providing an optical disc medium which comprises a system area and a data area following said system area, wherein said data area comprises at least one bordered area and a border area after said bordered area,
recording a user data in said bordered area; and
setting a border area after said bordered area when the record of said user data is completed.

9. The data recording method according to claim 8, further comprising:
setting a lead-out area on an outermost circumference side in said data area.

10. The data recording method according to claim 9, wherein said lead-out area has a record capacity equal to or less than that of said bordered area.

11. The data recording method according to claim 8, further comprising:
setting said bordered area on the outermost circumference side in said data area as a final area where a data is recorded.

12. The data recording method according to claim 11, wherein said setting comprises:
recording a finalizing data in said bordered area on the outermost circumference side.

13. The data recording method according to claim 11 or 12, further comprising:
recording a data indicating said bordered area on the outermost circumference side in said system area as a record control data.

14. The data recording method according to claim 13, wherein said system area comprises:
a test record area to which a trial recording operation is carried out to determine an optimal record condition when said user data is recorded in said data area;
a record control data area; and
a user data lead-in area in which a data is recorded to indicate a start position of said data area, and
said recording a data comprises:
recording said data indicating said bordered area on the outermost circumference side in said record control data area.

15. An optical disc apparatus comprising:
a rotation drive system configured to rotate an optical disc medium which comprises a system area and a data area following said system area, wherein said data area comprises at least one bordered area and a border area after said bordered area,
an access unit;
a control section configured to control said rotation drive system to rotate said optical disc medium; and to encode a record data and to control said access unit to irradiate a laser beam such that the encoded data is recorded on said optical disc medium,
wherein said control section controls said access unit such that a user data is recorded in said bordered area, and said border area is set when the record of said user data is completed.

16. The optical disc apparatus according to claim 15, wherein said control section controls said access unit such that a lead-out area is set on an outermost circumference side in said data area.

17. The optical disc apparatus according to claim 16, wherein said lead-out area has a record capacity equal to or less than that of said bordered area.

18. The optical disc apparatus according to claim 15, wherein said control section controls said access unit such that said bordered area on the outermost circumference side in said data area is set as a final area where a data is recorded.

19. The optical disc apparatus according to claim 18, wherein said control section controls said access unit to record a finalizing data in said bordered area on the outermost circumference side.

20. The optical disc apparatus according to claim 18 or 19, wherein said control section controls said access unit to record a data indicating said bordered area on the outermost circumference side in said system area as a record control data.

21. The optical disc apparatus according to claim 20, wherein said system area comprises:
a test record area to which a trial recording operation is carried out to determine an optimal record condition when said user data is recorded in said data area;
a record control data area in which said control data associated with said extended record control data area of each of said plurality of sets other than said first set is recorded; and
a user data lead-in area in which a data is recorded to indicate a start position of said data area, and
said control section controls said access unit to record said data indicating said bordered area on the outermost circumference side in said record control data area.
